Europäisches Patentamt

European Patent Office

Office européen des brevets

(19)

(11) Numéro de publication : **0 119 115**
**B1**

(12) **FASCICULE DE BREVET EUROPÉEN**

(45) Date de publication du fascicule du brevet :
22.01.86

(21) Numéro de dépôt : **84400257.6**

(22) Date de dépôt : **07.02.84**

(51) Int. Cl.⁴ : **F 23 C 11/02**, B 01 J 8/38,
**B 01 J 8/34**

(54) **Générateur thermique pour la réalisation du chauffage de fluide par échange thermique au moyen d'un lit fluidisé et le procédé pour sa mise en oeuvre.**

(30) Priorité : **21.02.83 FR 8302773**

(43) Date de publication de la demande :
**19.09.84 Bulletin 84/38**

(45) Mention de la délivrance du brevet :
**22.01.86 Bulletin 86/04**

(84) Etats contractants désignés :
**BE DE GB IT NL SE**

(56) Documents cités :
**DE-A- 2 605 886**
**DE-A- 2 804 073**
**DE-C-  971 793**
**GB-A-  774 325**
**GB-A- 2 074 297**
**US-A- 2 885 344**
**US-A- 3 169 835**
**US-A- 3 513 813**
**US-A- 3 736 908**

(73) Titulaire : **ELF FRANCE**
**137, Rue de l'Université**
**F-75007 Paris (FR)**

(72) Inventeur : **Claus, Guy**
**Villa Maranatha 50 chemin du Terrier Ternay**
**69360 St Symphorien d'Ouzon (FR)**

(74) Mandataire : **Epstein, Henri**
**18 Residence La Gaillarderie**
**F-78590 Noisy-Le-Roi (FR)**

## Description

La présente invention concerne un générateur thermique pour la réalisation du chauffage de fluide par échange thermique au moyen d'un lit fluidisé, ainsi qu'un procédé de mise en œuvre d'un tel générateur.

On connaît déjà des techniques, selon lesquelles un faisceau de tubes d'échange de chaleur est plongé dans un lit fluidisé, que l'on maintient à température élevée en y faisant brûler du combustible. De telles techniques présentent des difficultés inhérentes à l'impossibilité de réaliser des conditions optimales à la fois pour la combustion et pour l'échange thermique.

Il était connu du brevet DE-C-971 793 un générateur thermique comportant un foyer à flammes raccordé au bas d'une conduite verticale entourée d'une enceinte servant de lit fluidisé dans lequel est plongé un faisceau d'échangeur de chaleur. La combustion de combustible mélangé à des particules de sable s'opère dans une chambre de combustion classique. Les gaz de combustion entraînent les particules de sable qui remontent à une grande vitesse, de l'ordre de 8 à 12 m/s la conduite verticale, sont séparées au moyen d'un déflecteur et d'un cyclone des gaz de combustion et retombent ensuite dans l'enceinte de fluidisation.

Les vitesses élevées de déplacement de particules solides permettent difficilement de contrôler la température de la combustion et notamment de maintenir cette température à un niveau compatible avec une désulfuration par injection de carbonate de chaux. Par ailleurs, le transport pneumatique à ces vitesses pose des problèmes d'érosion de l'installation, d'attribution et de séparation de matières transportées.

La présente invention a pour but de remédier aux inconvénients signalés en proposant une installation dans laquelle on réalise dans une seule enceinte deux zones séparées, la zone de combustion et la zone d'échange thermique, et qui offre les possibilités de contrôle adéquat des conditions opératoires, telles que la vitesse des gaz et le débit de circulation de solides entre ces zones.

Le générateur thermique pour la réalisation du chauffage de fluide par échange thermique au moyen d'un lit fluidisé de particules inertes qui circulent dans une même enceinte entre une première zone, où elles accumulent une partie de la chaleur libérée par la combustion et une deuxième zone de lit fluidisé dense munie d'une grille de distribution et de moyens d'alimentation en air de fluidisation et contenant des tubes de circulation de fluide au contact du lit fluidisé selon l'invention est caractérisé en ce que la première zone comprend une zone de combustion constituée par un conduit vertical garni d'empilage réfractaire de façon à assurer le maintien d'un lit fluidisé ascendant et comportant au-dessus de l'empilage une ouverture ménagée dans la paroi du conduit pour le déversement des solides vers la zone de lit fluidisé dense, ledit conduit vertical comprenant à sa partie inférieure une chambre de prémélange et d'ignition comportant des moyens d'alimentation en air, en combustible et en particules inertes de recyclage en provenance de la zone de lit fluidisé dense.

Les moyens d'alimentation de la chambre de prémélange en particules inertes recyclées peuvent avantageusement consister en une ou plusieurs ouvertures latérales ménagées dans la paroi de cette chambre et communiquant avec la partie inférieure de la zone fluidisée d'échange thermique.

Un injecteur d'air comprimé placé à proximité de cette ouverture peut assister le passage de particules à cet endroit.

Le conduit vertical garni d'empilage et servant de foyer de combustion est surmonté de préférence d'un conduit de soutirage de gaz de combustion pouvant être relié à un cyclone. Ce conduit de soutirage est alors placé au-dessus de l'ouverture de déversement.

L'ouverture dans la paroi du conduit vertical servant de déversoir peut communiquer avec un autre conduit vertical situé à l'extérieur du premier conduit et débouchant à sa partie inférieure dans la zone fluidisée d'échange thermique.

Les tubes d'échangeur sont placés de préférence à proximité des parois du générateur dans la zone d'échange thermique, pour limiter les déperditions de chaleur.

Le générateur, en matériau réfractaire calorifuge, peut avoir une section rectangulaire ou circulaire. La chambre de prémélange et le conduit garni d'empilage constituant la zone de combustion seront placés au sein du générateur et la section de cette zone pourra mesurer 10 à 20 % de la section totale du générateur. Les parois de la chambre et du conduit seront en matériau réfractaire utilisé pour les foyers de combustion.

Le conduit vertical surmontant la chambre de prémélange est rempli jusqu'à une certaine hauteur de garnissage en matériau réfractaire laissant un passage libre sur une section d'au moins 50 % de la section totale de la zone de combustion.

A titre de garnissage, on emploiera de préférence une structure fixe constituée par l'empilement de barreaux disposés par couches superposées, les barreaux d'une même couche étant parallèles entre eux et décalés angulairement par rapport aux barreaux des couches adjacentes. Dans le cas où le décalage angulaire est de 90°, les barreaux des couches de même parité se trouvent parallèles entre eux, et il y a alors intérêt à les disposer en quinconce croisé, c'est-à-dire de sorte qu'en projection sur un plan horizontal, les barreaux d'une couche se trouvent latéralement décalés par rapport aux barreaux des deux couches dont ils ne sont séparés que par une seule couche.

En variante, on pourra employer aussi des anneaux, couramment appelés « anneaux Pall », réalisés à partir d'éléments cylindriques creux, en matériau réfractaire, dans lesquels des découpes incomplètes ont été réalisées et pliées vers l'intérieur, formant ainsi des ailettes. Pour la mise en marche du générateur, celui-ci pourra comporter un brûleur alimenté en combustible liquide ou solide débouchant dans la chambre de prémélange, ou bien des résistances électriques placées dans la paroi de la zone de combustion.

L'invention a également pour objet un procédé de combustion et d'échange thermique mis en œuvre au moyen du générateur décrit, caractérisé en ce qu'on règle les débits d'air de façon à assurer le maintien d'un lit fluidisé dense de particules inertes dans la zone d'échange thermique et d'un lit fluidisé circulant expansé de particules inertes et de combustible dans la zone de combustion sous forme d'une suspension dont la densité peut varier de 10 à 50 % en volume.

La conduite du générateur pour satisfaire à ces conditions sera appropriée en fonction de l'utilisation de l'installation et de la nature du combustible et de particules inertes. On emploiera par exemple du sable, dont la granulométrie variant de 450 à 1 250 μm présente une moyenne de 830 μm environ. Le combustible pourra être du charbon pulvérisé, du fuel lourd ou des résidus lourds.

Lorsque le combustible contient du soufre en quantité importante, il est avantageux d'introduire conjointement du calcaire ou de la dolomie, afin de fixer les oxydes de soufre dégagés par la combustion et de contrôler ainsi les rejets dans l'environnement.

Le débit d'air insufflé sous la grille de distribution de la zone fluidisée d'échange thermique sera suffisant pour assurer une vitesse minimale de fluidisation, qui dans le cas de la taille de particules et de leur masse volumique choisies devra être au minimum de 0,20 m/s et de préférence d'environ 0,4 m/s. Cette vitesse assurera le maintien d'un lit fluidisé dense, dont le solide occupe environ 50 % de volume, et permettra un bon transfert de chaleur au contact de tubes d'échangeur. Le débit d'air insufflé, indépendamment du premier, dans la chambre de prémélange de la zone de combustion devra assurer une vitesse 10 fois plus élevée, c'est-à-dire d'environ 4 m/s, de sorte que le lit fluidisé dans la zone de combustion soit un lit relativement aéré, constitué par une suspension dont la densité peut varier entre 10 et 50 % en volume, de préférence de 30 % en volume de solides.

D'autres caractéristiques et propriétés de l'installation et du procédé selon l'invention apparaîtront à la lumière de la description d'un exemple de réalisation qui suit à l'aide de dessins, dont

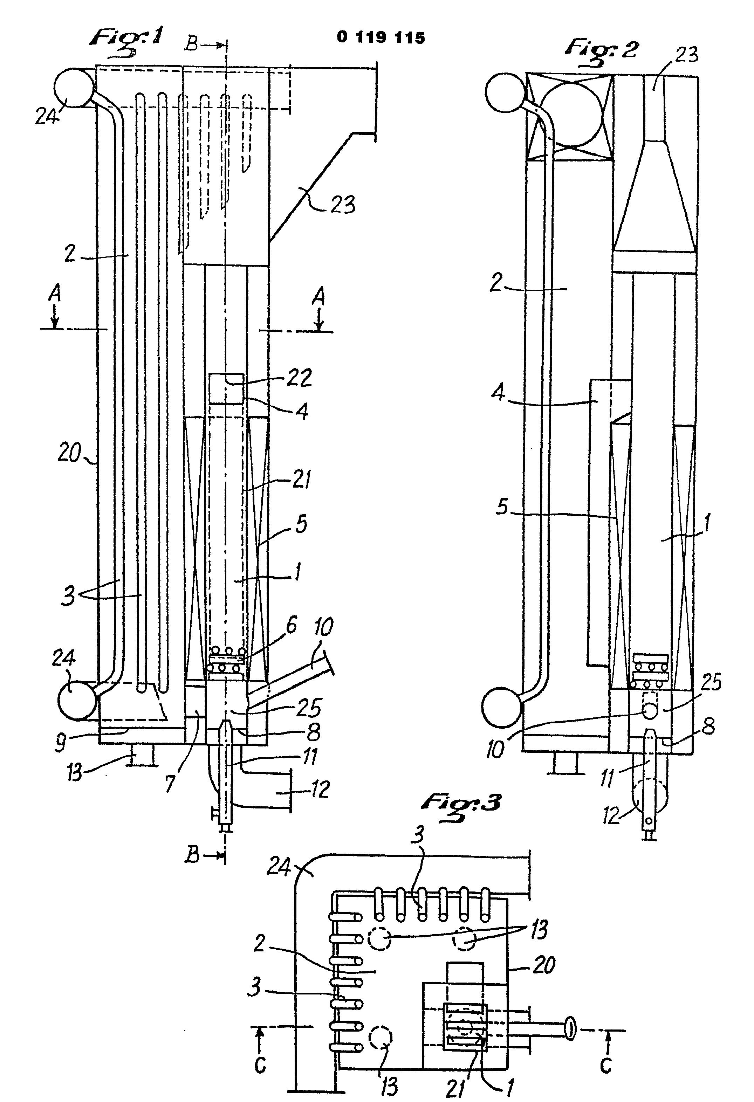

la figure 1   est une vue en coupe longitudinale selon C-C de la figure 3 du générateur thermique

la figure 2   est une vue en coupe longitudinale selon B-B de la figure 1, et

la figure 3   est une coupe transversale selon A-A de la figure 1.

Dans un générateur de section rectangulaire, une enveloppe extérieure 20 renferme deux zones : une zone de combustion 1 et une zone fluidisée de transfert de chaleur 2.

La zone de combustion se présente sous forme d'une cheminée verticale 21 de section rectangulaire placée dans un coin de la section rectangulaire du générateur et garnie jusqu'à une certaine hauteur d'empilage réfractaire 6. La cheminée 21 est entourée sur tous ses côtés de résistances électriques 5 servant au préchauffage du générateur. Dans sa partie supérieure, la cheminée est munie d'un orifice de déversement de trop-plein 22 qui débouche dans une goulotte verticale 4 placée à l'extérieur de la zone 1, servant à ramener les solides en provenance du foyer de combustion vers la partie inférieure de la zone fluidisée 2.

La cheminée 21 se prolonge vers le haut pour déboucher dans une chambre 23 laquelle peut éventuellement déboucher à l'entrée d'un cyclone.

Le foyer de la zone de combustion surmonte une chambre, garnie ou non, de prémélange 25 limitée vers le bas par une grille 8 et dans laquelle débouchent un tube d'alimentation 10 en combustible solide, un tube d'injection 11 de combustible liquide placé dans l'axe à l'intérieur d'un tube 12 d'arrivée d'air de combustion. Sur un des côtés communiquant avec la zone 2, la chambre de mélange 25 est pourvue d'une lucarne 7. La zone fluidisée de transfert de chaleur 2 est munie vers le bas de plusieurs arrivées 13 d'air de fluidisation débouchant sous une grille de diffusion 9.

Les deux côtés des parois 20 qui ne sont pas adjacents à la zone de combustion 1 sont garnis de tubes verticaux d'échangeur de chaleur 3, qui, reliés aux collecteurs 24 forment une installation de chaudière. Selon un exemple du fonctionnement de l'installation décrite, on charge 100 kg de sable de quartz qui, grâce à l'alimentation en air en 12 se trouve à l'état fluidisé dans la zone 1. On met en fonction l'installation de préchauffage électrique 5. Lorsque la température atteint 800 °C dans la zone de combustion, on démarre la fluidisation dans la zone dense 2 et on ajoute 50 kg de sable progressivement de façon à établir la différence de niveau entre les deux lits fluidisés d'environ 20 cm. Cette façon de procéder permet de réduire la vitesse de circulation du sable entre les deux zones. On démarre ensuite la circulation d'eau dans les tubes 3 en réglant son débit pour ne pas dépasser la température d'ébullition.

En initiant l'alimentation en combustible, on réduit progressivement la puissance de chauffage électrique, tout en maintenant la température du foyer autour de 850 °C. On coupe définitivement le chauffage électrique, lorsqu'on atteint 335 °C dans le lit dense et on maintient le débit de combustible à sa valeur maximale.

En régime stabilisé du générateur, on alimente la zone de combustion par un fuel lourd avec un débit de 6,4 kg/heure et un excès d'air d'environ 20 %. La puissance libérée est alors de l'ordre de

62 thermies/heure (2 595 MJ/heure). L'installation est remplie de sable, dont le débit de circulation entre la zone de combustion 1 et la zone fluidisée 2 est d'environ 300 kg/heure. La température du foyer est d'environ 850 °C, tandis que celle du lit dense est d'environ 335 °C.

Le débit d'eau entrant dans les tubes 3 à 60 °C et sortant vers un des collecteurs 24 à 80 °C est de 17 m³/heure.

On voit que les performances obtenues grâce au transfert de chaleur réalisé au moyen de l'installation selon l'invention sont très intéressantes. L'invention n'est pas limitée à la réalisation décrite, elle englobe également de nombreuses variantes et notamment en ce qui concerne la géométrie et les dimensions du générateur thermique, des agencements de la zone de combustion à l'intérieur du générateur, les modes d'alimentation en air, en combustible et en particules inertes des lits fluidisés, et la nature du combustible et du chauffage initial pour la mise en route, ainsi que les modes de contrôle de la quantité totale de solide dans l'installation.

## Revendications

1. Générateur thermique pour la réalisation du chauffage de fluide par échange thermique au moyen d'un lit fluidisé de particules inertes qui circulent dans une même enceinte entre une première zone, où elles accumulent une partie de la chaleur libérée par la combustion et une deuxième zone de lit fluidisé dense (2) munie d'une grille de distribution (9) et de moyens d'alimentation (13) en air de fluidisation et contenant des tubes (3) de circulation de fluide au contact du lit fluidisé, caractérisé en ce que la première zone comprend une zone de combustion (1) constituée par un conduit vertical (21) garni d'empilage réfractaire (6), de façon à assurer le maintien d'un lit fluidisé ascendant, et comportant au-dessus de l'empilage une ouverture (22) ménagée dans la paroi du conduit pour le déversement des solides vers la zone de lit fluidisé dense (2), ledit conduit vertical comprenant à sa partie inférieure une chambre de prémélange et d'ignition (25) comportant des moyens d'alimentation en air (12), en combustible (10, 11) et en particules inertes de recyclage en provenance de la zone de lit fluidisé dense (2).

2. Générateur thermique selon la revendication 1, caractérisé en ce que les moyens d'alimentation de la chambre de prémélange (25) en particules inertes recyclées consistent en une ouverture (7) latérale ménagée dans la paroi de cette chambre et communiquant avec la zone fluidisée d'échange thermique (2).

3. Générateur selon la revendication 2, caractérisé en ce qu'un injecteur d'air sous pression débouche à proximité de ladite ouverture (7) pour assister le passage de particules inertes de la zone d'échange thermique (2) à la chambre de prémélange (25).

4. Générateur thermique selon l'une des revendications 1 à 3, caractérisé en ce que le conduit vertical (21) garni d'empilage (6) est surmonté au-dessus de l'ouverture de deversement (22) d'une chambre (23) de soutirage de gaz de combustion reliée à un cyclone.

5. Générateur thermique selon l'une des revendications 1 à 4, caractérisé en ce que l'ouverture (22) dans la paroi du conduit vertical (21) garni d'empilage (6) est constituée en un déversoir de trop-plein, qui communique avec un conduit vertical (4) situé à l'extérieur dudit conduit (22) et débouchant à sa partie inférieure dans la zone fluidisée d'échange thermique (2).

6. Générateur selon l'une des revendications 1 à 5, caractérisé en ce que les tubes de circulation (3) de fluide sont placés à proximité des parois (20) de la zone d'échange thermique (2).

7. Générateur selon l'une des revendications 1 à 6, caractérisé en ce que les matériaux de garnissage consistent en une structure fixe constituée par un empilage de plusieurs couches de barres parallèles espacées, décalées angulairement d'une couche à l'autre.

8. Générateur selon la revendication 7, caractérisé en ce que le décalage angulaire des barreaux constituant le garnissage est de 90°, l'empilement de barreaux étant réalisé en « quinconce croisé ».

9. Générateur selon l'une des revendications 1 à 6, caractérisé en ce que les matériaux de garnissage sont constitués par des anneaux creux en acier réfractaire comportant des ailettes formées par pliage vers l'intérieur de l'anneau des découpes pratiquées dans le matériau de l'anneau.

10. Générateur selon l'une des revendications 1 à 8, caractérisé en ce que, dans la zone de combustion (1), la partie non obstruée par l'empilage, mesurée sur la section droite de passage, soit d'au moins 50 % de la section totale de cette zone.

11. Générateur selon l'une des revendications 1 à 10, caractérisé en ce que la surface droite de la zone de combustion (1) garnie représente 10 à 20 % de la surface totale de la section droite du générateur.

12. Générateur selon l'une des revendications 1 à 11, caractérisé en ce que le générateur a une forme parallélipipédique et que la zone de combustion, également de forme parallélipipédique, présente une ou deux parois contiguës à la paroi du générateur (20), la surface intérieure de parois du générateur non adjacentes à la zone de combustion étant garnie de tubes de circulation (3) de fluide.

13. Procédé pour la mise en œuvre d'un générateur selon l'une des revendications 1 à 12, caractérisé en ce qu'on règle les débits d'air de façon à assurer le maintien d'un lit fluidisé dense de particules inertes dans la zone d'échange thermique et d'un lit fluidisé expansé de particules inertes et de combustible ascendant dans la zone de combustion sous forme d'une suspension dont la densité peut varier entre 10 et 50 % en volume de solides.

14. Procédé selon la revendication 13, caractérisé en ce que la vitesse d'air insufflé dans la zone de combustion est d'environ 10 fois supérieure à celle de l'air insufflé dans la zone fluidisée d'échange thermique.

15. Procédé selon la revendication 13 ou 14, caractérisé en ce qu'on assiste le passage de particules inertes de la zone d'échange thermique vers la chambre de prémélange à l'aide d'un jet d'air dont la vitesse est de quelques mètres par seconde.

16. Procédé de combustion et d'échange thermique selon l'une des revendications 13 à 15, caractérisé en ce qu'on charge le générateur de sable de façon à établir un lit fluidisé dans la zone de combustion, on préchauffe cette zone à l'aide d'un chauffage électrique à une température de l'ordre de 800 °C, on établit un lit fluidisé dense dans la zone fluidisée de transfert de chaleur, on alimente la zone de combustion en combustible, on réduit progressivement le chauffage électrique, on règle par addition de sable le niveau du lit fluidisé dense de façon à établir une différence de niveau entre les deux lits à une valeur variant de 10 à 25 cm, on supprime le chauffage électrique dès que la température du lit fluidisé dense a atteint une température d'environ 335 °C, on alimente les tubes d'échange thermique en eau de refroidissement et on règle la vitesse de l'air insufflé dans la zone de combustion à environ 4 m/s et celle de l'air insufflé dans la zone du lit dense à environ 0,4 m/s.

17. Procédé selon la revendication 13, caractérisé en ce que du calcaire de la dolomie ou tout autre matériau solide pulvérulent capable de fixer les oxydes de soufre est introduit conjointement avec le combustible, afin de contrôler la teneur des fumées rejetées en oxydes de soufre.

**Claims**

1. A heat generator for heating a fluid by heat exchange through a fluidized bed of inert particles which circulate in the same enclosure between a first zone, where they accumulate a part of the heat released by the combustion and a second dense fluidized bed zone (2) having a distribution grid (9) and fluidization air supply means (13) and containing fluid circulation tubes (3) in contact with the fluidized bed, characterized in that the first zone comprises a combustion zone (1) formed by a vertical duct (21) provided with a refractory stack (6) in order to ensure the maintenance of an ascending fluidized bed and comprising above the stack an opening (22) formed in the wall of the duct for overflowing the solids towards the dense fluidized bed zone (2), said vertical duct comprising a premix and ignition chamber (25) having means for supplying with air (12), fuel (10, 11) and inert recycling particles coming from the dense fluidized bed zone (2).

2. The heat generator according to claim 1, characterized in that the means for supplying the premix chamber (25) with recycled inert particles consists of a lateral opening (7) formed in the wall of this chamber and communicating with the heat exchange fluidized zone (2).

3. The generator according to claim 2, characterized in that a pressurized air injector opens in the vicinity of said opening (7) for assisting the passage of inert particles from the heat exchange zone (2) to the premix chamber (25).

4. The heat generator according to one of claims 1 to 3, characterized in that the vertical duct (21) provided with the stack (6) is mounted above the overflow opening (22) with a combustion gas drawing off chamber (23) connected to a cyclone.

5. The heat generator according to one of claims 1 to 4, characterized in that the opening (22) in the wall of the vertical duct (21) provided with the stack (6) is formed as an overflow, which communicates with the vertical duct (4) situated outside said duct (21) and opening at its lower part into the heat exchange fluidized zone (2).

6. The generator according to one of claims 1 to 5, characterized in that the fluid circulation tubes (3) are placed in the vicinity of the walls (20) of the heat exchange zone (2).

7. The generator according to one of claims 1 to 6, characterized in that the filling materials consists of the fixed structure formed by a stack of several layers spaced parallel bars, offset angularly from one layer to the other.

8. The generator according to claim 7, characterized in that the angular offset of the bars forming the filling is 90°, the stack of bars being formed in « a crossed quincunx pattern ».

9. The generator according to one of claims 1 to 6, characterized in that the filling materials are formed by annular rings made from refractory steel comprising fins formed by bending towards the inside of the ring cut-outs formed in the material of the ring.

10. The generator according to one of claims 1 to 8, characterized in that, in the combustion zone (1) the part not obstructed by the stack, measured across the passage cross section is at least 50 % of the total section of this zone.

11. The generator according to one of claims 1 to 10, characterized in that the cross sectional area of the filled combustion zone (1) represents 10 to 20 % of the total area of the cross section of the generator.

12. The generator according to one of claims 1 to 11, characterized in that the generator has a parallelepipedic shape and that the combustion zone, also with a parallelepipedic shape, has one or two walls adjacent the wall of the generator (20), the inner surface of the walls of the generator not adjacent the combustion zone being fitted with fluid circulation tubes (3).

13. A process for putting into operation the generator according to one of claims 1 to 12, characterized in that the airflow rates are regulated so as to ensure the maintenance of a dense fluidized bed of inert particles in the heat exchange zone and an expanded fluidized bed of inert particles and fuel ascending in the combustion zone in the form of suspension whose density may vary between 10 and 50 % by volume of solids.

14. The process according to claim 13, characterized in that the blown air rate in the combustion zone is about 10 times greater than that of the air blown into the heat exchange fluidized zone.

15. The process according to claim 13 or 14, characterized in that the passage of inert particles is assisted from the heat exchange zone to the premix chamber by means of an air jet whose speed is a few meters per second.

16. The combustion and heat exchange process according to one of claims 13 to 15, characterized in that the generator is charged with sand so as to establish a fluidized bed in the combustion zone, this zone is preheated by means of electric heating to a temperature of the order of 800 °C, a dense fluidized bed is established in the heat transfer fluidized zone, the combustion zone is supplied with fuel, the electric heating is gradually reduced, the level of the dense fluidized bed is regulated by addition of sand so as to establish a difference of level between the two beds at a value varying from 10 to 25 cm, the electric heating is switched off as soon as a temperature of about 335 °C is reached, the heat exchange tubes are supplied with cooling water and the rate of air blown into the combustion zone is regulated to about 4 m/s and that of the air blown into the zone of the dense bed to about 0.4 m/s.

17. The process according to claim 13, characterized in that limestone, dolomite or any other solid powdery material capable of fixing the sulfur oxides is introduced jointly with the fuel, so as to control the sulfur oxide content of the discharged smoke and fumes.

**Patentansprüche**

1. Wärmeerzeuger zur Aufheizung von Fluiden durch Wärmetausch mittels eines Wirbelbettes aus inerten Partikeln, die in einem geschlossenen Raum zwischen einem ersten Bereich, in dem sie einen Teil der durch Verbrennung freigewordenen Wärme ansammeln, und einem zweiten kompakten Bereich (2) des Wirbelbettes zirkulieren, der mit einem Verteilergitter (9) und Zufuhrmitteln (13) für Wirbelbettluft sowie Rohren (3) für die Zirkulierung des mit dem Wirbelbett in Berührung stehenden Fluids versehen ist, dadurch gekennzeichnet, dass der erste Bereich einen Verbrennungsbereich (1) umfasst, der durch einen vertikalen Kanal (21) gebildet wird, der mit einer feuerfesten Packung (6) so ausgerüstet ist, dass er ein ansteigendes Wirbelbet aufrechterhält und der über dieser Packung eine Öffnung (22) in der Wand des Kanals aufweist, um Feststoffe in den Bereich des kompakten Wirbelbettes (2) abzugeben, wobei dieser vertikale Kanal in seinem unteren Teil eine Kammer (25) für Vorvermischung und Zündung aufweist, die Mittel für die Zufuhr von Luft (12), Brennstoff (10, 11) und inerte Rezyklus-Partikel enthält, die aus dem kompakten Wirbelbettbereich abgegeben werden.

2. Wärmeerzeuger nach Anspruch 1, dadurch gekennzeichnet, dass die Mittel für die Beschickung der Vormischkammer (25) mit inerten Rezyklus-Partikeln aus einer seitlichen Öffnung (7) bestehen, die in der Wand dieser Kammer vorgesehen ist und mit dem Wirbelbettbereich (2) für den Wärmetausch in Verbindung steht.

3. Wärmeerzeuger nach Anspruch 2, dadurch gekennzeichnet, dass eine Druckluftdüse in der Nähe der Öffnung (7) vorgesehen ist, um den Strom von inerten Partikeln aus dem Wärmetauschbereich (2) in die Vormischkammer (25) zu unterstützen.

4. Wärmeerzeuger nach einem der Ansprüche 1 bis 3, dadurch gekennzeichnet, dass der mit einer Packung (6) versehene vertikale Kanal (21) oberhalb der Auslassöffnung (22) mit einer Kammer (23) für den Abzug von Verbrennungsgasen versehen ist, die an einen Zyklon angeschlossen ist.

5. Wärmeerzeuger nach einem der Ansprüche 1 bis 4, dadurch gekennzeichnet, dass die Öffnung (22) in dem mit einer Packung (6) versehenen vertikalen Kanal (21) aus einem Überlauf besteht, der an einen vertikalen Kanal (4) ausserhalb des Kanals (22) angeschlossen ist und mit seinem unteren Teil in den Wärmetauschbereich (2) des Wirbelbettes eintaucht.

6. Wärmetauscher nach einem der Ansprüche 1 bis 5, dadurch gekennzeichnet, dass die Zirkulationsrohre (3) für Fluid in der Nähe der Wände (20) des Wärmetauschbereichs (2) angeordnet sind.

7. Wärmeerzeuger nach einem der Ansprüche 1 bis 6, dadurch gekennzeichnet, dass das Packungsmaterial aus einer festen Struktur besteht, die durch eine Anhäufung mehrerer Schichten im Abstand voneinander angeordneten Stangen gebildet wird, die von Schicht zu Schicht winklig versetzt sind.

8. Wärmeerzeuger nach Anspruch 7, dadurch gekennzeichnet, dass der Winkelversatz der die Packung bildenden Stangen 90° beträgt, wobei die Schichtung der Stangen in einem « gekreuzten Fünfeck » erfolgt.

9. Wärmeerzeuger nach einem der Ansprüche 1 bis 6, dadurch gekennzeichnet, dass das Packungsmaterial aus hohlen feuerfesten Stahlringen besteht, die Flügel aufweisen, die durch Biegen zur Innenseite der Ringe von Ausschnitten gebildet werden, die in den Werkstoff der Ringe eingebracht wurden.

10. Wärmeerzeuger nach einem der Ansprüche 1 bis 8, dadurch gekennzeichnet, dass im Verbrennungsbereich (1) der nicht von der Packung ausgefüllte Teil, gemessen im geraden Durchgangsquerschnitt, mindestens 50 % des Gesamtquerschnitts dieses Bereiches beträgt.

11. Wärmeerzeuger nach einem der Ansprüche 1 bis 10, dadurch gekennzeichnet, dass die gerade Fläche des bepackten Verbrennungsbereiches (1) 10 bis 20 % der Gesamtfläche des geraden Querschnitts des Wärmeerzeugers beträgt.

12. Wärmeerzeuger nach einem der Ansprüche 1 bis 11, dadurch gekennzeichnet, dass der Wärmeerzeuger die Form eines Parallelepipeds hat und dass der Verbrennungsbereich, der ebenfalls die Form eines Parallelepipeds aufweist, eine oder zwei an die Wand des Wärmeerzeugers (20) anschliessende Wände aufweist, wobei die Innenfläche der Wände des Wärmeerzeugers, die nicht an den Verbrennungsbereich anschlissen, mit Zirkulationsrohren (3) für Fluid bestückt sind.

13. Verfahren für den Einsatz eines Wärmeerzeugers nach einem der Ansprüche 1 bis 12, dadurch gekennzeichnet, dass die Luftzufuhr so geregelt wird, dass ein kompaktes Wirbelbett aus inerten Partikeln im Wärmetauschbereich aufrechterhalten wird, sowie ein expandiertes Wirbelbett aus inerten Partikeln und Brennstoff, das im Verbrennungsbereich in Form einer Aufschlämmung aufsteigt und dessen Dichte zwischen 10 und 50 % Feststoffvolumen schwanken kann.

14. Verfahren nach Anspruch 13, dadurch gekennzeichnet, dass die Geschwindigkeit der in den Verbrennungsbereich eingeblasenen Luft etwa 10 mal höher ist, als die Geschwindigkeit der in den Wärmetauschbereich des Wirbelbettes eingeblasenen Luft.

15. Verfahren nach einem der Ansprüche 13 oder 14, dadurch gekennzeichnet, dass der Durchfluss von inerten Partikeln zwischen dem Wärmetauschbereich und der Vormischkammer durch einen Luftstrom unterstützt wird, dessen Geschwindigkeit einige Meter pro Sekunde beträgt.

16. Verfahren für Verbrennung und Wärmetausch nach einem der Verfahren 13 bis 15, dadurch gekennzeichnet, dass der Sandgenerator so beladen wird, dass er im Verbrennungsbereich ein Wirbelbett bildet und dieser Bereich mit einer elektrischen Heizvorrichtung auf eine Temperatur von 800° aufgeheizt wird, dass ein kompaktes Wirbelbett im Wärmeübertragungsberich gebildet wird, dass die Verbrennungszone mit Brennstoff gespeist wird, dass die elektrische Heizung langsam reduziert wird, dass durch Zufuhr von Sand das Niveau des kompakten Wirbelbettes so geregelt wird, dass sich zwischen den beiden Wirbelbetten ein Höhenunterschied von 10 bis 25 cm einstellt, dass die elektrische Heizung abgestellt wird, sobald die Temperatur des kompakten Wirbelbettes einen Wert von etwa 335 °C erreicht hat, dass die Wärmetauscherrohre mit Kühlwasser beschickt werden und dass die Geschwindigkeit der in den Verbrennungsbereich eingeblasenen Luft auf etwa 4 m/s und diejenige der in den Bereich des kompakten Wirbelbettes eingeblasenen Luft auf etwa 0,4 m/s geregelt wird.

17. Verfahren nach Anspruch 13, dadurch gekennzeichnet, dass Dolomitkalk oder ein anderes festes pulverförmiges Material, das fähig ist, Schwefeloxyde zu binden, gemeinsam mit dem Brennstoff eingegeben wird, um den Gehalt des abgegebenen Rauches an Schwefeloxyden zu kontrollieren.

Fig. 1

0 119 115

Fig. 2

Fig. 3